(19) Europäisches Patentamt
European Patent Office
Office européen des brevets

(11) **EP 3 403 842 B1**

## (12) EUROPÄISCHE PATENTSCHRIFT

(45) Veröffentlichungstag und Bekanntmachung des Hinweises auf die Patenterteilung:
**22.04.2020 Patentblatt 2020/17**

(21) Anmeldenummer: **18000221.4**

(22) Anmeldetag: **07.03.2018**

(51) Int Cl.:
*B42D 25/324* (2014.01)    *B42D 25/328* (2014.01)
*B42D 25/36* (2014.01)    *B42D 25/373* (2014.01)
*B42D 25/23* (2014.01)    *B42D 25/24* (2014.01)
*B42D 25/29* (2014.01)    *B42D 25/425* (2014.01)
*B42D 25/445* (2014.01)    *B42D 25/44* (2014.01)
*G02B 5/18* (2006.01)

(54) **VERFAHREN ZUR HERSTELLUNG EINES SICHERHEITSELEMENTS SOWIE DESSEN VERWENDUNG**

METHOD FOR PRODUCING A SECURITY ELEMENT AND ITS USE

PROCÉDÉ DE FABRICATION D'UN ÉLÉMENT DE SÉCURITÉ ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2017 AT 2052017**

(43) Veröffentlichungstag der Anmeldung:
**21.11.2018 Patentblatt 2018/47**

(73) Patentinhaber: **Hueck Folien Gesellschaft m.b.H. 4342 Baumgartenberg (AT)**

(72) Erfinder:
• **Trassl, Stephan**
**4342 Baumgartenberg (AT)**

• **Nees, Dieter**
**8160 Thannhausen (AT)**
• **Stadlober, Barbara**
**8044 Graz (AT)**
• **Landertshamer, Sonja**
**4040 Linz (AT)**

(74) Vertreter: **KLIMENT & HENHAPEL Patentanwälte OG**
**Gonzagagasse 15/2**
**1010 Wien (AT)**

(56) Entgegenhaltungen:
**EP-A1- 2 921 888**    **EP-A2- 1 972 462**
**WO-A1-2009/083151**    **WO-A2-2008/017362**

**Beschreibung**

Die Erfindung betrifft ein Verfahren zur Herstellung eines Sicherheitselements für Datenträger, wie Wertdokumente und dergleichen, das optisch aktive Eigenschaften aufweist, sowie die Verwendung des mit dem Verfahren hergestellten Sicherheitselements.

Datenträger, wie Wertdokumente und dergleichen, werden zum Schutz vor Fälschungen und zur Prüfung der Authentizität mit Sicherheitselementen versehen. Unter Datenträgern im Sinne der vorliegenden Erfindung werden insbesondere Wertdokumente, wie Banknoten, Urkunden, Aktien, Ausweisdokumente, wie Pässe und dergleichen verstanden.

Als Sicherheitselemente werden häufig optisch aktive Elemente eingesetzt. Unter optisch aktiven Elementen werden im Sinne der vorliegenden Anmeldung insbesondere Beugungsstrukturen, wie Hologramme, holographische Gitterbilder, Oberflächenreliefs und dergleichen verstanden. Diese optisch aktiven Elemente werden im Allgemeinen durch Prägung einer Lackschicht erzeugt und mit einer Reflexionsschicht kombiniert.

Diese optisch aktiven Strukturen zeigen unter unterschiedlichen Betrachtungswinkeln unterschiedliche Bilder. Derartige betrachtungswinkelabhängige Effekte können mit normalen Drucktechniken nicht imitiert werden. Zur Erhöhung der Fälschungssicherheit werden bei derartigen Sicherheitselementen partielle Aussparungen vor allem in der Reflexionsschicht der optisch aktiven Strukturen vorgesehen. Diese Aussparungen können in Form von Buchstaben, Zahlen, Symbolen, Zeichen, Logos, geometrischen Formen und dergleichen vorliegen und werden im Allgemeinen nachträglich erzeugt, beispielsweise durch Waschverfahren oder Ätztechniken.

Es kann aber auch vorteilhaft sein, die Aussparungen als Durchsichtsbereiche zwischen den optisch aktiven Strukturen vorzusehen. Dabei ist es besonders vorteilhaft, diese Durchsichtsbereiche möglichst exakt außerhalb der optisch aktiven Strukturen vorzusehen, wobei die Reflexionsschicht dann ausschließlich im Bereich der optisch aktiven Struktur vorhanden sein soll.

In jedem Fall ist eine registergenaue Übereinstimmung zwischen der optisch aktiven Struktur und der Reflexionsschicht ohne Toleranzen besonders erstrebenswert um eine ausgezeichnete Fälschungssicherheit zu gewährleisten.

Aus WO 2006/084685 A ist ein Verfahren zur Herstellung eines Mehrschichtkörpers sowie ein nach diesem Verfahren hergestellter Mehrschichtkörper bekannt.

Dabei ist bei einem Mehrschichtkörper mit einer partiell ausgeformten ersten Schicht vorgesehen, dass in einem ersten Bereich einer Replizierschicht des Mehrschichtkörpers eine erste diffraktive Reliefstruktur mit einem hohen Tiefen-zu-Breiten-Verhältnis der einzelnen Strukturelemente, insbesondere mit einem Tiefen-zu-Breiten-Verhältnis von > 0,3, abgeformt ist. Diese erste Schicht wird auf die Replizierschicht in dem ersten Bereich und in einem zweiten Bereich, in dem die erste Reliefstruktur nicht in der Replizierschicht abgeformt ist, mit konstanter Flächendichte, bezogen auf eine von der Replizierschicht aufgespannte Ebene, aufgebracht. Die Strukturelemente, die ein hohes Tiefen-zu-Breiten-Verhältnis, insbesondere von > 0,3 aufweisen, sind als Berge und Täler ausgebildet, d.h. die Täler reichen in die Replizierlackschicht hinein, die Berge ragen über die von der Replizierlackschicht aufgespannte Ebene hinaus. Durch die diffraktive Reliefstruktur wird in diesem ersten Bereich die Oberfläche der Replizierlackschicht gegenüber dem zweiten Bereich, in dem die Reliefstruktur nicht vorhanden ist vergrößert. Bei Aufbringung einer Schicht, in diesem Fall einer metallischen Reflexionsschicht mit konstanter Flächendichte nimmt die Dicke der ersten Schicht einen vorbestimmten Wert an, wohingegen die Dicke der ersten Schicht im zweiten Bereich bedeutend geringer ist. Dieser Dickenunterschied wird für die Entfernung der ersten Schicht oder einer darauf situierten Schicht ausgenutzt, sodass die erste Schicht und gegebenenfalls eine auf dieser ersten Schicht situierte weitere Schicht selektiv entfernt werden kann. Aus WO 2006/079489 A ist ein Sicherheitselement bekannt, bei dem eine Reflexionsschicht vorgesehen ist, in die durch Einwirkung von Laserstrahlen individuelle Kennzeichnungen in Form von Mustern, Buchstaben, Zahlen oder Bildern eingebracht sind. Die Reflexionsschicht weist dabei einen ersten Teilbereich mit einer Interferenzstruktur und einen zweiten Teilbereich auf. Die beiden Teilbereiche wechselwirken mit der Laserstrahlung unterschiedlich, so dass die individuellen Kennzeichnungen aufgrund einer durch die Einwirkung des Laserstrahls bewirkten Änderung der optischen Eigenschaften der Reflexionsschicht zumindest eines der beiden Teilbereiche visuell erkennbar ist.

Aus EP 2 444 826 A ist ein Sicherheitselement und ein Verfahren zu dessen Herstellung bekannt, bei dem selektiv eine, auf einer optisch aktiven Struktur aufgebrachte, Reflexionsschicht mit einer Maskierungsschicht versehen ist. Anschließend wird durch in Kontaktbringen mit einem reaktiven Gas oder einer reaktiven Flüssigkeit die Reflexionsschicht in den nicht maskierten porösen Bereichen selektiv entfernt.

Ferner sind aus den Dokumenten EP 2 921 888 A1, WO 2009/083151 A1, WO 2008/017362 A2 gattungsgemäße Verfahren zur Herstellung eines Sicherheitselements bekannt.

Aufgabe der Erfindung war es ein Verfahren zur Herstellung eines Sicherheitselementes bereitzustellen, bei dem eine exakte registerhaltige Übereinstimmung der optisch aktiven Struktur mit der Reflexionsschicht gewährleistet wird.

Gegenstand der Erfindung ist daher ein in dem Anspruch 1 definiertes Verfahren zur Herstellung eines Sicherheitselements, das optisch aktive Sicherheitsmerkmale aufweist.

Als Trägersubstrate kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, PTFE, ETFE (Ethylentetrafluorethylen), PTFE (Polytetra-fluorethylen), PVF (Polyvinylfluorid), PVDF (Polyvinylidenfluorid), und EFEP (Ethylen-Tetrafluorethylen-Hexafluorpropylen-Fluorterpolymer) in Frage.

Die Trägerfolien weisen vorzugsweise eine Dicke von 5 - 700 $\mu$m, bevorzugt 5 - 200 $\mu$m, besonders bevorzugt 5 - 50 $\mu$m auf.

Auf das Trägersubstrat wird eine strahlungshärtbare Prägelackschicht aufgebracht.

Die strahlungshärtbare Prägelackschicht weist vorzugsweise eine hohe Oberflächenenergie auf.

In diese Prägelackschicht werden in zumindest einem ersten Teilbereich Nanostrukturen und in zumindest einem zweiten Bereich Mikrokanäle eingebracht. Vorzugsweise werden diese Nanostrukturen und Mikrokanäle gleichzeitig, in einem Arbeitsgang eingebracht. Geeignet zur Einbringung der Nanostrukturen und Mikrokanäle sind Prägeverfahren, bei denen das Prägewerkzeug vorzugsweise derart gestaltet ist, dass sowohl die Nanostrukturen als auch die Mikrokanäle in einem Arbeitsgang in die strahlungshärtbare Prägelackschicht eingebracht werden.

Unter Nanostrukturen werden hier Strukturen mit einer geringen Tiefe verstanden, die im Wesentlichen optisch aktive Beugungsstrukturen, wie Hologramme, Oberflächenreliefs und dergleichen darstellen. Üblicherweise weisen die Nanostrukturen eine Tiefe und eine Breite von jeweils < 2 $\mu$m, vorzugsweise 20 - 500 nm, besonders bevorzugt 200 - 500 nm auf. Das Tiefen- zu Breitenverhältnis beträgt dabei ungefähr 1:3 bis 1:0,3 vorzugsweise 1:2 - 1:0,5, besonders bevorzugt etwa 1:1.

Unter Mikrokanälen werden hier Strukturen verstanden, die eine Tiefe von 2 - 100 $\mu$m, bevorzugt 3 - 20 $\mu$m und eine Breite von 2 - 100 $\mu$m aufweisen. Das Tiefen- zu Breitenverhältnis beträgt dabei 1:1 bis 10:1, bevorzugt 2:1 bis 5:1. Die Mikrokanäle weisen dabei eine sich in die Tiefe verjüngende Geometrie, beispielsweise eine V-förmige Geometrie oder eine Geometrie mit konvexen Kanten auf.

Das Verhältnis der Nanostrukturen zu den Mikrokanälen beträgt 1:4 bis 1:5000, vorzugsweise 1:6 bis 1:100.

Nach Aushärtung der Prägelackschicht, vorzugsweise unter UV-Bestrahlung, wird eine in einem Lösungsmittel beispielsweise in einem organischen Lösungsmittel oder in Wasser lösliche Lift-Off-Lackschicht aufgebracht.

Die Prägelackschicht muss auf die nach Einbringen der Nanostrukturen und Mikrokanäle aufgebrachte Lift-Off-Lackschicht abgestimmt sein, damit durch die Lift-Off-Lackschicht ausschließlich die Mikrokanäle benetzt und gefüllt werden. Dabei wird erfindungsgemäß der sogenannte Wickingeffekt ausgenutzt.

Ist beispielweise die Lift-Off-Lackschicht eine in Wasser lösliche Lackschicht, so muss die Prägelackschicht eine hohe Oberflächenenergie aufweisen.

Der Wickingeffekt, das heißt das spontane Benetzen und Füllen eines Mikrokanals mit einer Flüssigkeit (z.B. einem Lift-Off Lack), basiert auf einer exakten Abstimmung der Oberflächenenergie von Prägelack und Lift-Off-Lack (gekennzeichnet durch den Kontaktwinkel $\theta$, den der Lift-Off Lacks auf einer glatten Fläche des Prägelacks einnimmt) und der Geometrie der Mikrokanäle (gekennzeichnet durch den Öffnungswinkel $\alpha$ eines Kanals mit sich nach unten verjüngendem Querschnitt, also z.B. eines Kanals mit V-förmigem Querschnitt□ beschrieben durch folgende Formel:

$$\theta < \varphi = 90° - \alpha/2 \qquad\qquad\qquad I$$

$\varphi$ ist hier der Kantenwinkel der Seitenwände mit der Horizontalen. Formel I ist die sogenannte Concus-Finn Relation (P. Concus and R. Finn: On a class of capillary surfaces. J. Analyse Math. 23 (1970), 65-70.), die beschreibt, dass eine Flüssigkeit (hier Lift-off Lack) einen V-förmigen Kanal (im Prägelackmaterial) und nur diesen spontan benetzt, wenn der Kontaktwinkel kleiner als der Kantenwinkel ist. Für kleine Kanal-Öffnungswinkel ermöglicht die Concus-Finn Relation bei vielen Flüssigkeiten eine vollkommene ungehinderte Benetzung des Kanals. Die Relation ist beispielsweise auch für einen Kanal gültig, dessen Seitenwände aus zwei Kreiszylindern gebildet werden, wodurch ein Öffnungswinkel von 0° - in der Spitze - bzw. am Boden des Grabens -entsteht.

Um das Wickingverhalten auf strukturierten Oberflächen zu verstehen, ist außerdem auch Formel II wichtig

$$cos\theta_c = \frac{1-\phi_s}{r-\phi_s}, \quad \theta < \theta_c \qquad\qquad II$$

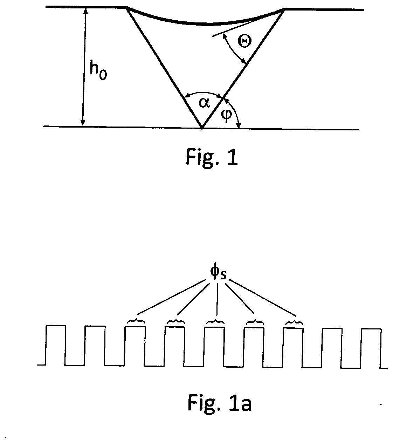

Hier bedeutet $\theta_c$ den kritischen Kontaktwinkel des Lift-Off-Lacks auf einer rauen oder strukturierten Prägefläche, der geometrisch bedingt ist und für das Benetzen bzw. Füllen eines Lift-off Lacks in den Kanälen unterschritten werden muss. Der kritische Kontaktwinkel wird durch den Rauhigkeitsfaktor r und den Plateauflächenanteil $\Phi_s$ (Anteil der nicht benetzten Fläche der Mikrokanäle) bestimmt (vgl. Fig. 1a).

Ist Bedingung II erfüllt, kommt es zum Hemi-Wicking, d.h. nur die Kanäle werden gefüllt, während die Plateauflächen trocken bleiben.

Der Rauigkeitsfaktor ist der Quotient aus wahrer Oberfläche und ihrer horizontalen Projektion, wie beispielsweise in Dinesh Chandra et al., "Dynamics of a droplet imbibing on a rough surface", Langmuir 2011,27,13401-13405 beschrieben.

Der Plateauflächenänteil $\Phi_s$ stellt den Anteil der nicht benetzten Fläche der Mikrokanäle dar. Dieser wird erfindungsgemäß minimiert ($\Phi_s \sim 0$), um im Bereich der Mikrokanäle eine vollständig selektive Benetzung der Mikrokanäle zu erzielen.

Durch die Ausnutzung des Wickingeffekts wird die Prägelackschicht nur im Bereich der Mikrokanäle durch den Lift-Off-Lack benetzt, im Bereich der flachen Nanostrukturen findet keine Benetzung durch Anlagerung des Lift-Off-Lacks statt.

Je größer der kritische Winkel $\theta_c$, also je größer nach obiger Formel der Rauhigkeitsfaktor und je kleiner der Plateauflächenanteil der Mikrokanäle $\Phi_s$, desto mehr Gestaltungsfreiheit besteht bei der Oberflächenenergie des Prägelacks (vgl. Fig. 1)

Nur die Erfüllung von Bedingung I und Bedingung II ermöglicht eine vollständige spontane und ausschließliche Benetzung bzw. Füllung von Mikrokanälen (mit nicht rechteckigem Querschnitt) durch einen Lift-Off Lack, wobei die Plateauflächen (mit flachen Nanostrukturen) unbenetzt bleiben.

Besonders geeignete UV-vemetzbare Prägelackzusammensetzungen sind beispielsweise Prägelacke auf Basis Polyethylenglykol-Diacrylaten (PEGDA), ggf. mit 1 - 50 Masse% an höherfunktionalen Acrylaten, wie Trimethylolpropantriacrylat (TMPTA) oder Pentaerythritoltetraacrylat (PETTA) oder Mischungen von Acryloylmorpholin (ACMO) mit 10 - 50 Masse% an höherfunktionalen Acrylaten, wie Trimethylolpropantriacrylat (TMPTA) oder Pentaerythritoltetraacrylat (PETTA).

Weitere geeignete Prägelackzusammensetzung sind beispielsweise Lackzusammensetzungen auf Basis eines Polyester-, eines Epoxy- oder Polyurethansystems das zwei oder mehr verschiedene, dem Fachmann geläufige Photoinitiatoren enthält, die bei unterschiedlichen Wellenlängen eine Härtung des Lacksystems in unterschiedlichem Ausmaß initiieren können.

Diese Prägelackzusammensetzungen sind polar bzw. hydrophil und zeigen hohe Oberflächenenergien von bis zu 60 mN/m.

Die Prägelackzusammensetzungen enthalten 0,5-5% Photoinitatoren, die die Vernetzung bei Behandlung mit UV-Strahlung oder Elektronenstrahl bewirken. Besonders geeignete Photoinitiatoren sind beispielsweise Photoinitiatoren auf Basis von Acyl-phosphinoxiden, wie Iragure 819®, Genocure TPO®, Genocure BAPO® oder oligomere polyfunktionale Alphahydroxyketone wie Esacure KIP 150®, monomere Alphahydroxyketone, wie Esacure KL 200®, Genocure DMHA® oder Darocure 1173®. Es können aber auch Mischungen dieser Photoinitiatoren eingesetzt werden.

Besonders geeignete Lift-Off-Lackzusammensetzungen sind beispielsweise Hydroxyethylcaprolactonacrylat wie HECLA® von BASF oder Miramer M100® von Miwon, Ethoxyethoxyethylacrylat wie Miramer M170® von Miwon oder EDGA® von BASF, 2-Ethoxyethylacrylat wie Viscoat 190® von Kowa, Tetrahydrofurfurylacrylate wie Miramer M150® von Miwon oder Sartomer 302®, Viscoat 150®, Gamma-Butylolactonacrylat wie GBLA® von Kowa, 4-Acryloylmorpholin wie ACMO® von Rahn oder Luna ACMO® von DKSH, Hydroxypropylacrylat wie HPA® von BASF, Isobornylacrylat wie IBOA® von Allnex oder IBXA® von Kowa.

Diese Lift-Off Lackzusammensetzungen enthalten 0,5-5 % an Photoinitiatoren, wie beispielsweise Photoinitiatoren auf Basis von Acyl-phosphinoxiden, wie Iragure 819®, Genocure TPO®, Genocure BAPO® oder oligomere polyfunktionale Alphahydroxyketone wie Esacure KIP 150®, monomere Alphahydroxyketone, wie Esacure KL 200®, Genocure DMHA® oder Darocure 1173®. Es können aber auch Mischungen dieser Photoinitiatoren eingesetzt werden.

Isobornylacrylat kann auf Grund seiner geringen Oberflächenspannung und damit einem geringem Kontaktwinkel auch in Verbindung mit Prägelacken geringerer Oberflächenenergie, wie beispielsweise Polyurethanacrylat-basierten Prägelacken verwendet werden.

Nach Aufbringung der Lift-Off-Lackzusammensetzung wird diese mittels Elektronenstrahl oder UV-Strahlung polymerisiert.

Alternativ können auch thermische trocknende oder physikalisch härtende Lackzusammensetzungen auf Basis MMA oder Ethylcellulose oder Cycloolefincopolymer verwendet werden.

Die Lift-Off-Lackschicht kann auch nur im Bereich der Mikrokanäle gedruckt werden, eventuelle Registerschwankungen werden dabei durch die Benetzung der Mikrokanäle ausgeglichen.

Anschließend wird auf die Lift-Off-Lackschicht eine Reflexionsschicht vorzugsweise eine metallische Reflexionsschicht aufgebracht. Vorzugsweise wird die metallische Reflexionsschicht durch PVD- oder CVD-Verfahren, etwa durch thermisches Verdampfen, durch Sputtern oder Elektronenstrahlbedampfung abgeschieden. Geeignete metallische Reflexionsschichten sind beispielsweise Schichten aus Al, Sn, Cu, Zn, Pt, Pd, Au, Ag, Cr, Ti, Ni, Mo, Fe oder deren Legierungen, wie z.B. Cu-Al, Cu-Sn, Cu-Zn, Eisenlegierungen, Stahl, Edelstahl, Metallverbindungen, wie Oxide oder Sulfide von Metallen, wie beispielsweise Kupferoxid, Aluminiumoxid, Zinksulfid und dergleichen.

Im darauf folgenden Verfahrensschritt wird die Lift-Off-Lackschicht durch Einwirkung eines organischen Lösemittels oder von Wasser gleichzeitig mit der darüber liegenden metallischen Reflexionsschicht entfernt.

Die metallische Reflexionsschicht verbleibt dabei nur im Bereich der Nanostrukturen auf der Prägelackschicht, da sich die Lift-Off Lackschicht ausschließlich in den Bereichen der Mikrokanäle befand.

Dadurch ergibt sich eine exakte Übereinstimmung der Nanostrukturen mit der metallischen Reflexionsschicht ohne Toleranzen.

Anschließend kann die so erhaltene Struktur ggf. mit einer oder mehreren Schutzlackschichten oder weiteren funktionellen Schichten versehen werden. Dabei muss der Brechungsindex der an die Prägelackschicht angrenzenden Schicht an den Brechungsindex der Prägelackschicht angepasst sein, um optische Wechselwirkungen mit den Mikrokanälen zu verhindern.

In dem erfindungsgemäßen Verfahren wird also durch gezielte Vor-Strukturierung mittels eines Prägeprozesses eine definierte, lokal begrenzte Benetzung von verschiedenen Lacken auf einer Folienoberfläche erreicht. In Kombination mit nachfolgender Beschichtung im Vakuum (z.B. Sputtern, Aufdampfen) und Lift-off führt dies zur Herstellung einer selbstjustierten lokal begrenzten Beschichtung.

Insbesondere wird damit die selbstjustierte und selektive Beschichtung von Flächen mit hinreichend flachen Nanostrukturen durch funktionelle Schichten aus Metallen, Metalloxiden, Halbleitern oder CVD-Polymeren ermöglicht.

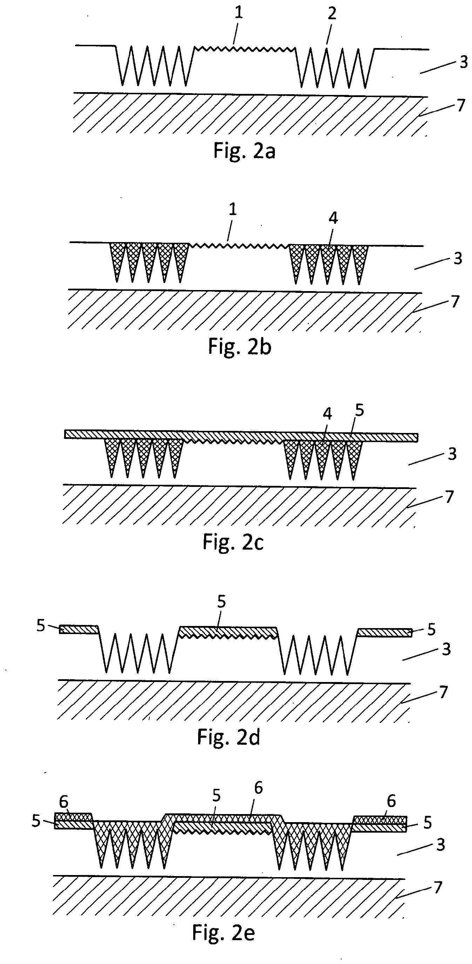

In den Figuren 2a bis 2e ist der erfindungsgemäße Verfahrensablauf zur Herstellung des Sicherheitselements dargestellt.

Darin bedeuten:

1 die Nanostrukturen
2 die Mikrokanäle
3 die Prägelackschicht
4 die Lift-off-Lackschicht
5 die Reflexionsschicht
6 eine weitere Schicht
7 das Trägersubstrat

Dabei zeigt Fig. 2a die Oberflächenstrukturierung der auf einem Trägersubstrat 7 aufgebrachten Prägelackschicht 3 mit den Nanostrukturen 1 und den Mikrokanälen 2.

Die Nanostrukturen 1 stellen in diesem Fall beispielsweise eine Holgrammprägung dar, beispielsweise mit einer Tiefe von 200-500 nm und einer Breite von 200-500 nm.

Die Mikrokanäle weisen einen V-förmigen Querschnitt dar und weisen in Abhängigkeit von der Dicke der Lackschicht eine Tiefe von 3 bis 30 $\mu$m und eine Öffnungsweite von 1 bis 15 $\mu$m auf. Die Mikrokanäle sind in die von der Lackschicht aufgespannte Ebene eingebracht, reichen aber nicht über die von der Lackschicht aufgespannten Ebene hinaus.

Fig. 2b zeigt die Verteilung des im nächsten Verfahrensschritt aufgebrachten Lift-Off-Lacks 4 in den Mikrokanälen 2, wobei die Oberfläche der Nanostrukturen 1 von der Lift-Off-Lackschicht 4 aufgrund des Wickingeffekts nicht benetzt wird.

In Fig. 2c wurde auf die Prägelackschicht 3 und die Lift-Off-Lackschicht 4 eine vollflächige reflektierende metallische Schicht 5 aufgebracht. Diese metallische Schicht kann gegebenenfalls auch bereits partiell aufgebracht werden, wobei zumindest die Nanostrukturen 1 sowie teilweise die angrenzenden Mikrokanäle 2 mit der metallischen Reflexionsschicht 5 versehen werden müssen.

In Fig. 2d wurde die Lift-Off-Lackschicht zusammen mit der über dieser Lackschicht 4 situierten Reflexionsschicht 5 durch Einwirkung eines Lösungsmittels oder von Wasser entfernt, wobei die Ablösung gegebenenfalls durch mechanische Einwirkung oder Ultraschall unterstützt werden kann.

Die metallische Reflexionsschicht 5 ist nun absolut deckungsgleich mit dem Bereich der Nanostrukturen 1 auf der Prägelackschicht 3 vorhanden.

Fig. 2e zeigt das Sicherheitselement nach Aufbringen einer weiteren Schicht 6, die eine Schutzlackschicht oder eine weitere funktionelle Schicht mit einem Sicherheitsmerkmal sein kann.

Das Sicherheitselement kann gegebenenfalls weitere vollflächige oder partielle funktionelle Schichten aufweisen, wie elektrisch leitfähige Schichten, magnetische Schichten und/oder Schichten mit optischen Merkmalen, wie beispielsweise farbige Druckschichten, lumineszierende (fluoreszierende oder phosphoreszierende) Druckschichten, Schichten, die einen Farbwechsel- oder Farbkippeffekt aufweisen.

Ferner kann das Sicherheitselement ein- oder beidseitig mit einer oder mehreren Schutzlackschichten und/oder Klebeschichten versehen sein.

Die erfindungsgemäß hergestellten Sicherheitselemente sind gegebenenfalls nach entsprechender Konfektionierung daher als Sicherheitsmerkmale in Datenträgern, insbesondere Wertdokumenten wie Ausweisen, Karten, Banknoten oder Etiketten, Siegeln und dergleichen geeignet, aber auch auf Verpackungsmaterial beispielsweise in der pharmazeutischen, der Elektronik- und/oder Lebensmittelindustrie, beispielsweise auf Blisterfolien, Faltschachteln, Abdeckungen, Folienverpackungen und dergleichen geeignet.

Für die Anwendung als Sicherheitsmerkmale werden die Substrate bzw. Folienmaterialien bevorzugt in Streifen oder Fäden oder Patches geschnitten, wobei die Breite der Streifen oder Fäden vorzugsweise 0,05 - 10 mm betragen kann und die Patches vorzugsweise mittlere Breiten bzw. Längen von 0,3 - 20 mm.

Für die Anwendung in oder auf Verpackungen wird das Folienmaterial bevorzugt in Streifen, Bänder, Fäden oder Patches geschnitten, wobei die Breite der der Fäden, Streifen bzw. Bänder vorzugsweise 0,05 - 50 mm beträgt und die Patches vorzugsweise mittlere Breiten und Längen von 2 - 30 mm aufweisen.

Beispiele:

Beispiel 1:

|  | Prägelack: |
|---|---|
| 80 m-% | PEGDA (MW = 600 g/mol entsprechend etwa n = 10) |
| 17 m-% | TMPTA |
| 3 m-% | KL200 |

Lift-Off-Lack oder "Waschfarbe":

|  | Wasserlöslich: |
|---|---|
| 97 m-% | ACMO |
| 3 m-% | KL200 |

Verfahrensparameter Aufbringung, Prägung etc

Beispiel 2:

| 50 m-% | ACMO |
|---|---|
| 47 m-% | TMPTA |
| 3 m-% | KL200 |

Lift-Off-Lack

|  | Wasserlöslich: |
|---|---|
| 97 m-% | ACMO |
| 3 m-% | KL200 |

Beispiel 3:

|  | Prägelack: |
|---|---|
| 50 m-% | Trifunktionales UA-Oligomer z.B. Ebecryl 4820® |
| 47 m-% | Hexandioldiacrylat (HDDA) |
| 3 m-% | KL200 |

Lift-Off-Lack:

97 m-%    IBOA

3 m-%    KL200

## Patentansprüche

1. Verfahren zur Herstellung eines Sicherheitselements, das optisch aktive Sicherheitsmerkmale aufweist, umfassend folgende Verfahrensschritte:

   a) Bereitstellen eines Trägersubstrats (7)
   b) Aufbringen einer strahlungshärtbaren Prägelackschicht ; (3) auf das Trägersubstrat
   c) Einbringen von Nanostrukturen (1) in zumindest einen ersten Teilbereich und Einbringen von Mikrokanälen (2) in zumindest einen zweiten Teilbereich der strahlungshärtbaren Lackschicht,
   d) Aushärten der strahlungshärtbaren Lackschicht (3)
   e) Aufbringen einer in einem Lösungsmittel oder in Wasser lösbaren Lift-off-Lackschicht (4), wobei diese Lackschicht ausschließlich die Mikrokanäle (2) benetzt und füllt,
   f) Aufbringen einer Reflexionsschicht (5),
   g) Entfernen der in einem Lösungsmittel oder Wasser lösbaren Lackschicht (4) durch Einwirkung eines Lösungsmittels oder Wasser gemeinsam mit der darüberliegenden Reflexionsschicht (5),
   h) ggf. Aufbringen einer oder mehrerer weiteren funktionellen Schicht(en) oder Schutzlackschicht(en).

2. Verfahren nach Anspruch 1, **dadurch gekennzeichnet, dass** in Schritt c) die Nanostrukturen in einem ersten Bereich und die Mikrokanäle in einem zweiten Bereich der strahlungshärtbaren Lackschicht gleichzeitig in einem Arbeitsgang eingebracht werden.

3. Verfahren nach einem der Ansprüche 1 oder 2, **dadurch gekennzeichnet, dass** als Prägelack UV-vernetzbare Prägelackzusammensetzungen auf Basis Polethylenglykol-Diacrylaten (PEGDA), ggf. mit 1 - 10 Masse % an höherfunktionalen Acrylaten, wie Trimethylolpropantriacrylat (TMPTA) oder Pentaerythritoltetraacrylat (PETTA) oder Mischungen von AcryloylMorpholin (ACMO) mit 10 - 50 Masse% an höherfunktionalen Acrylaten, wie Trimethylolpropantriacrylat (TMPTA) oder Pentaerythritoltetraacrylat (PETTA), oder Lacksysteme auf Basis eines Polyester-, eines Epoxy- oder Polyurethansystems das zwei oder mehr verschiedene, dem Fachmann geläufige Photoinitiatoren enthält, die bei unterschiedlichen Wellenlängen eine Härtung des Lacksystems in unterschiedlichem Ausmaß initiieren können verwendet werden.

4. Verfahren nach einem der Ansprüche 1 bis 2, **dadurch gekennzeichnet, dass** als Lift-Off Lack Hydroxyethylcaprolactonacrylat, Ethoxyethoxyethylacrylat, 2-Ethoxyethylacrylat, Tetrahydrofurfurylacrylat, Gamma-Butylolactonacrylat, Acryloylmorpholin, Hydroxypropylacrylat oder Isobornylacrylat oder thermische trocknende oder physikalisch härtende Lackzusammensetzungen auf Basis MMA oder Ethylcellulose oder Cycloolefincopolymer verwendet werden.

5. Verfahren nach einem der Ansprüche 1 bis 4, **dadurch gekennzeichnet**, das der Prägelack und der Lift-Off-lack 0,5 - 5% Photoinitiatoren enthalten.

6. Verfahren nach einem der Ansprüche 1 bis 5, **dadurch gekennzeichnet, dass** der Prägelack und der Lift-Off Lack Photoinitiatoren auf Basis von Acyl-phosphinoxiden, oder oligomerer polyfunktionaler Alphahydroxyketone oder monomerer Alphahydroxyketone enthalten.

7. Verfahren nach einem der Ansprüche 1 bis 6, **dadurch gekennzeichnet, dass** die Reflexionsschicht aus Metallen, wie Al, Sn, Cu, Zn, Pt, Pd, Au, Ag, Cr, Ti, Ni, Mo, Fe oder deren Legierungen, wie z.B. Cu-Al, Cu-Sn, Cu-Zn, Eisenlegierungen, Stahl, Edelstahl, Metallverbindungen, wie Oxide oder Sulfide von Metallen, wie beispielsweise Kupferoxid, Aluminiumoxid, Zinksulfid, besteht.

8. Verfahren nach einem der Ansprüche 1 bis 7, **dadurch gekennzeichnet, dass** die Reflexionsschicht durch ein PVD- oder CVD-Verfahren, etwa durch thermisches Verdampfen, durch Sputtern oder Elektronenstrahlbedampfung abgeschieden wird.

EP 3 403 842 B1

9. Verfahren nach einem der Ansprüche 1 bis 8, **dadurch gekennzeichnet, dass** das Tiefen-zu-Breiten-Verhältnis der Nanostrukturen 1:3 bis 1:0,3 beträgt.

10. Verfahren nach einem der Ansprüche 1 bis 9, **dadurch gekennzeichnet, dass** das Tiefen-zu-Breiten-Verhältnis der Mikrokanäle 1:1 bis 10:1 beträgt.

11. Verfahren nach einem der Ansprüche 1 bis 10, **dadurch gekennzeichnet, dass** das Verhältnis der Tiefe der Nanostrukturen zu den Mikrokanälen 1:4 bis 1:5000 beträgt, bevorzugt aber 1:6 bis 1:100.

12. Verfahren nach einem der Ansprüche 1 bis 11, **dadurch gekennzeichnet, dass** die Mikrokanäle einen sich nach unten verjüngenden Querschnitt aufweisen.

13. Verfahren nach Anspruch 11, **dadurch gekennzeichnet, dass** die Mikrokanäle einen V-förmigen Querschnitt oder eine Geometrie mit konvexen Kanten aufweisen.

14. Verfahren nach einem der Ansprüche 1 bis 13, **dadurch gekennzeichnet, dass** die Sicherheitselement anschließend mit einer oder mehreren funktionellen Schichten und/oder Schutzlackschichten oder Klebeschichten versehen wird.

15. Verwendung des Sicherheitselements hergestellt nach einem der Ansprüche 1 bis 14 in oder auf Datenträgern, Wertdokumenten, wie Ausweisen, Karten, Banknoten oder Etiketten, Siegeln, auf Verpackungsmaterialen, oder Produkten.

**Claims**

1. Method of producing a security element having optically active security features, comprising the following method steps:

   a) providing a carrier substrate (7),
   b) application of a radiation-curable embossing lacquer layer (3) on the carrier substrate,
   c) introduction of nanostructures (1) into at least one first subregion and introduction of microchannels (2) into at least one second subregion of the radiation-curable lacquer layer,
   d) curing of the radiation-curable lacquer layer (3),
   e) application of a lift-off lacquer layer (4) soluble in a solvent or in water, wherein this lacquer layer exclusively wets and fills the microchannels (2),
   f) application of a reflective layer (5),
   g) removal of the lacquer layer (4), which is soluble in a solvent or water, by the action of a solvent or water together with the overlying reflective layer (5),
   h) optionally, application of one or more additional functional layer(s) or protective lacquer layer(s).

2. Method according to claim 1, **characterized in that** in step c) the nanostructures in a first region and the microchannels in a second region of the radiation-curable lacquer layer are applied simultaneously in one operation.

3. Method according to one of claims 1 or 2, **characterized in that** UV-crosslinkable embossing lacquer compositions based on polyethylene glycol diacrylates (PEGDA), optionally with 1-10% by mass of higher-functional acrylates, such as trimethylolpropane triacrylate (TMPTA) or pentaerythritol tetraacrylate (PETTA) or mixtures of acryloyl morpholine (ACMO) with 10-50% by mass of higher-functional acrylates, such as trimethylolpropane triacrylate (TMPTA) or pentaerythritol tetraacrylate (PETTA), or lacquer systems based on a polyester, epoxy or polyurethane system containing two or more different photoinitiators, which are known to the person skilled in the art and which can initiate curing of the lacquer system to a different extent at different wavelengths are used as embossing lacquer layer.

4. Method according to one of claims 1 to 2, **characterized in that** hydroxyethylcaprolactone acrylate, ethoxyethoxyethyl acrylate, 2-ethoxyethyl acrylate, tetrahydrofurfuryl acrylate, gamma-butylolactone acrylate, acryloylmorpholine, hydroxypropyl acrylate or isobornyl acrylate or thermal drying or physically curing lacquer compositions based on MMA or ethyl cellulose or cycloolefin copolymer are used as lift-off lacquer layer.

5. Method according to one of claims 1 to 4, **characterized in that** the embossing lacquer and the lift-off lacquer contain 0.5-5% photoinitiators.

6. Method according to one of claims 1 to 5, **characterized in that** the embossing lacquer and the lift-off lacquer contain photoinitiators based on acylphosphine oxides, or oligomeric polyfunctional alpha-hydroxyketones or monomeric alpha-hydroxyketones.

7. Method according to one of claims 1 to 6, **characterized in that** the reflective layer consists of metals such as Al, Sn, Cu, Zn, Pt, Pd, Au, Ag, Cr, Ti, Ni, Mo, Fe or their alloys, such as Cu-Al, Cu-Sn, Cu-Zn, iron alloys, steel, stainless steel, metal compounds such as oxides or sulfides of metals, such as copper oxide, aluminum oxide, zinc sulfide.

8. Method according to one of claims 1 to 7, **characterized in that** the reflective layer is deposited by a PVD or CVD process, for example by thermal evaporation, by sputtering or electron beam evaporation.

9. Method according to one of claims 1 to 8, **characterized in that** the depth-to-width ratio of the nanostructures is 1:3 to 1:0.3.

10. Method according to one of claims 1 to 9, **characterized in that** the depth-to-width ratio of the microchannels is 1:1 to 10:1.

11. Method according to one of claims 1 to 10, **characterized in that** the ratio of the depth of the nanostructures to the microchannels is 1:4 to 1:5000, but preferably 1:6 to 1:100.

12. Method according to one of claims 1 to 11, **characterized in that** the microchannels have a downwardly tapering cross-section.

13. Method according to claim 11, **characterized in that** the microchannels have a V-shaped cross-section or a geometry with convex edges.

14. Method according to one of claims 1 to 13, **characterized in that** the security element is subsequently provided with one or more functional layers and/or protective lacquer layers or adhesive layers.

15. Use of the security element produced according to one of claims 1 to 14 in or on data carriers, value documents such as identity cards, cards, banknotes or labels, seals, on packaging materials or products.

**Revendications**

1. Procédé pour la fabrication d'un élément de sécurité qui présente des caractéristiques de sécurité produisant un effet optique, comprenant les étapes de procédé suivantes :

   a) préparation d'un substrat porteur (7),
   b) application sur le substrat porteur d'une couche de vernis gaufrée (3) pouvant être durcie par un rayonnement,
   c) création de nanostructures (1) dans au moins une première zone partielle et création de microcanaux (2) dans au moins une deuxième zone partielle de la couche de vernis pouvant être durcie par un rayonnement,
   d) durcissement de la couche de vernis (3) pouvant être durcie par un rayonnement,
   e) application d'une couche de vernis de décollement (4) soluble dans un solvant ou dans l'eau, qui mouille et remplit exclusivement les microcanaux (2),
   f) application d'une couche réfléchissante (5) ;
   g) élimination de la couche de vernis (4) soluble dans un solvant ou dans l'eau par l'action d'un solvant ou d'eau en même temps que de la couche réfléchissante (5) qui se trouve par-dessus,
   h) le cas échéant, application d'un ou plusieurs autres couches fonctionnelles ou couches de vernis de protection.

2. Procédé selon la revendication 1, **caractérisé en ce que** dans l'étape c), les nanostructures peuvent être appliquées simultanément dans une première zone et les microcanaux dans une deuxième zone de la couche de vernis pouvant être durcie par un rayonnement, au cours d'une même étape de travail.

3. Procédé selon l'une des revendications 1 ou 2, **caractérisé en ce que** le vernis gaufré utilisé est une composition de vernis gaufré polymérisable aux UV à base de diacrylates de polyéthylène-glycol (PEGDA), avec éventuellement 1 à 10 % de la masse d'acrylates de fonction supérieure tels que du triacrylate de triméthylolpropane (TMPTA) ou du tétraacrylate de pentaérythritol (PETTA) ou des mélanges d'acryloylmorpholine (ACMO) contenant 10 à 50 % de la masse d'acrylates de fonction supérieure tels que du triacrylate de triméthylolpropane (TMPTA) ou du tétraacrylate de pentaérythritol (PETTA), ou des systèmes de vernis à base d'un système de polyester, d'époxy ou de polyuréthane contenant deux ou plusieurs photo-initiateurs différents connus de l'homme de l'art, qui peuvent déclencher un durcissement plus ou moins poussé du système de vernis à différentes longueurs d'onde.

4. Procédé selon l'une des revendications 1 à 2, **caractérisé en ce que** le vernis de décollement utilisé est de l'acrylate d'hydroxyéthylcaprolactone, de l'acrylate d'éthoxyéthoxyéthyle, de l'acrylate de 2-éthoxyéthyle, de l'acrylate de tétrahydrofurfuryle, de l'acrylate de gamma-butyrolactone, de l'acryloylmorpholine, de l'acrylate d'acrylate d'hydroxypropyle ou de l'acrylate d'isobornyle ou des compositions de vernis à séchage thermique ou à durcissement physique à base de MMA ou d'éthylcellulose ou de copolymères de cyclo-oléfines.

5. Procédé selon l'une des revendications 1 à 4, **caractérisé en ce que** le vernis gaufré et le vernis de décollement contiennent entre 0,5 et 5 % de photo-initiateurs.

6. Procédé selon l'une des revendications 1 à 5, **caractérisé en ce que** le vernis gaufré et le vernis de décollement contiennent des photo-initiateurs à base d'oxydes d'acylphosphine ou d'alpha-hydroxycétones oligomères polyfonctionnelles ou d'alpha-hydroxycétones monomères.

7. Procédé selon l'une des revendications 1 à 6, **caractérisé en ce que** la couche réfléchissante se compose de métaux tels qu'Al, Sn, Cu, Zn, Pt, Pd, Au, Ag, Cr, Ti, Ni, Mo, Fe ou de leurs alliages, par exemple Cu-Al, Cu-Sn, Cu-Zn, d'alliages de fer, d'acier, d'acier inoxydable, de composés métalliques tels que des oxydes ou sulfures de métal, par exemple d'oxyde de cuivre, d'oxyde d'aluminium, de sulfure de zinc.

8. Procédé selon l'une des revendications 1 à 7, **caractérisé en ce que** la couche réfléchissante est déposée par un procédé de dépôt physique ou chimique en phase vapeur, par exemple par vaporisation thermique, par pulvérisation cathodique ou par évaporation par faisceau d'électrons.

9. Procédé selon l'une des revendications 1 à 8, **caractérisé en ce que** le rapport profondeur-largeur des nanostructures est de 1:3 à 1:0,3.

10. Procédé selon l'une des revendications 1 à 9, **caractérisé en ce que** le rapport profondeur-largeur des microcanaux est de 1:1 à 10:1.

11. Procédé selon l'une des revendications 1 à 10, **caractérisé en ce que** le rapport entre la profondeur des nanostructures et des microcanaux est de 1:4 à 1:5000, de préférence de 1:6 à 1:100.

12. Procédé selon l'une des revendications 1 à 11, **caractérisé en ce que** les microcanaux présentent une section qui se resserre vers le bas.

13. Procédé selon la revendication 11, **caractérisé en ce que** les microcanaux présentent une section en forme de V ou une géométrie à arêtes convexes.

14. Procédé selon l'une des revendications 1 à 13, **caractérisé en ce que** l'élément de sécurité est ensuite muni d'une ou plusieurs couches fonctionnelles et/ou couches de vernis de protection ou couches de colle.

15. Utilisation de l'élément de sécurité fabriqué selon l'une des revendications 1 à 14 dans ou sur des supports de données, des documents de valeur tels que des pièces d'identité, des cartes, des billets de banque ou des étiquettes, des sceaux, sur des matériaux d'emballage ou sur des produits.

Fig. 1

Fig. 1a

Fig. 2a

Fig. 2b

Fig. 2c

Fig. 2d

Fig. 2e

**IN DER BESCHREIBUNG AUFGEFÜHRTE DOKUMENTE**

**In der Beschreibung aufgeführte Patentdokumente**

- WO 2006084685 A
- WO 2006079489 A
- EP 2444826 A

- EP 2921888 A1
- WO 2009083151 A1
- WO 2008017362 A2

**In der Beschreibung aufgeführte Nicht-Patentliteratur**

- **P. CONCUS ; R. FINN.** On a class of capillary surfaces. *J. Analyse Math.,* 1970, vol. 23, 65-70

- **DINESH CHANDRA et al.** Dynamics of a droplet imbibing on a rough surface. *Langmuir,* 2011, vol. 27, 13401-13405